# EUROPÄISCHE PATENTSCHRIFT

(11) **EP 2 994 726 B1**
(45) Veröffentlichungstag und Bekanntmachung des Hinweises auf die Patenterteilung: **12.02.2020**
(21) Anmeldenummer: 14724989.0
(22) Anmeldetag: 05.05.2014
(51) Int. Cl.: G01G 1/18, G01G 21/16, G01L 5/00, G01G 19/12, G01G 19/18

(54) **ELASTISCH DEFORMIERBARER LASTTRÄGER MIT EINER MESSANORDNUNG FÜR DIE LAST**
ELASTICALLY DEFORMABLE LOAD BEARING STRUCTURE COMPRISING A MEASURING ASSEMBLY FOR THE LOAD
PORTE-CHARGE ÉLASTIQUEMENT DÉFORMABLE COMPRENANT UN DISPOSITIF DE MESURE DE LA CHARGE

(30) Priorität: 08.05.2013 CH 934132013
(43) Veröffentlichungstag der Anmeldung: 16.03.2016
(73) Patentinhaber: DIGI SENS Holding AG, 3280 Murten (CH)
(72) Erfinder: LUSTENBERGER, Martin, CH-1752 Villars sur Glâne (CH)
(74) Vertreter: Stump, Beat
(86) Internationale Anmeldenummer: PCT/CH2014/000061
(87) Internationale Veröffentlichungsnummer: WO 2014/179897

(56) Entgegenhaltungen:
- US-A- 3 488 997
- US-A- 4 095 660
- US-A- 4 361 199

## Beschreibung

Die vorliegende Erfindung betrifft einen Lastträger gemäss dem Oberbegriff von Anspruch 1, einen mit solch einem Lastträger ausgerüsteten Lastwagen nach Anspruch 12 sowie eine Seilbahn nach Anspruch 14.

Häufig ist es notwendig, eine auf einen Lastträger einwirkende Last in Echtzeit zu messen. Eine besondere Anwendung ist im Bereich von Lastwagen (LKW) und Seilbahnen gegeben, aber auch in den verschiedensten Gebieten der Technik.

Transportgut wird häufig in Mulden oder Containern gesammelt und der entsprechende Behälter dann von einem LKW aufgenommen, transportiert und am Zielort wieder abgeladen. In der Regel ist dabei das Gewicht des gefüllten, d.h. vom LKW geladenen Behälters nicht bekannt, so dass das zulässige Gesamtgewicht des LKW unerkannt überschritten werden kann. Die Bestimmung des Gewichts eines Behälters bzw. der transportieren Last kann aber auch für die Berechnung der Transportkosten oder für sonstige Zwecke erforderlich sein.

Häufig sind Wiegeanlagen für LKW's am jeweiligen Lade- oder Zielort nicht vorhanden, was im Fall des zulässigen Gesamtgewichts besonders problematisch ist, da dann bis zur Wiegeanlage bereits ein Weg unerlaubt zurückgelegt worden und (bei Überlast) eine Rückkehr zur Reduktion des Transportgewichts unwirtschaftlich ist.

Mulden werden mit Hilfe eines Auslegers des LKW frei schwebend auf dessen Ladefläche gehievt, ebenso beispielsweise Abfallbehälter, die von entsprechend ausgestatteten Entsorgungsfahrzeugen über verschwenkbare Träger vor dem Frontende des Entsorgungsfahrzeugs ergriffen, über dessen Führerkabine gehievt und dann in von oben in den Beladeraum des Entsorgungsfahrzeugs gekippt werden. Hier sind Lösungen zur Messung des Gewichts der aufgeladenen Last bekannt geworden, die allerdings daran gebunden sind, dass die Last während dem Beladungsvorgang für einen Moment vollständig an den Beladungsorganen aufgehängt ist bzw. von diesen getragen wird. Die Messung des Gewichts erfolgt dann während diesem Moment.

Vermehrt werden jedoch Container mit gegenüber Mulden erheblich grösserer Transportlast transportiert, die auch erheblich grössere Abmessungen aufweisen, so dass die Beladesysteme für Mulden bzw. kleinere Transportbehälter nicht genügen.

In der Regel wird der Container am Frontende vom Haken des Lasthebegeräts ergriffen, über die Kante der Ladefläche des LKW gehoben und auf diese gezogen. Dabei schleift der Boden des Containers über die Kante der Ladefläche, die in der Regel dafür mit Rollen versehen ist. Das Lasthebegerät muss bei diesem wesentlich effizienteren Beladungsvorgang nicht das volle Gewicht des Containers tragen können, ebenso entfällt die aufwendige Befestigung am Hebegerät, wie es für einen während der Beladung frei schwebenden Container notwendig wäre.

Hier sind Vorschläge bekannt geworden, den Aufbau des LKW mit Messzellen zur Bestimmung des Gewichts der geladenen Last zu versehen, was aber aufwendige Einbauarbeiten im Chassis und im Fall der Reparatur den entsprechenden Aufwand (Entfernung des Aufbaus) erfordert. Eine solche Ausführungsform ist durch JP 2008 - 002913 von Shin Meiwa Ind. Co. Ltd. bekannt geworden. Der durch diese Ausführungsform erforderliche Aufwand ist erheblich, müssen doch Lastzellen in das Chassis verbaut werden, welche die gesamte Last eines Containers (bis zu 40 t oder mehr) tragen und gleichzeitig präzise Messwerte liefern können.

Weiter sind Vorschläge bekannt geworden, die Rollen an Achsstummeln anzuordnen, deren Durchbiegung bei der Belastung durch Dehnmesstreifen detektiert und ein Gewicht zugeordnet wird. Dazu werden in die hohl ausgebildeten Achsstummel Dehnmesstreifen eingeführt und in kreuzweise übereinandergelegt an der Innenwand befestigt. Nachteilig ist bei dieser Lösung, dass notwendigerweise der Innendurchmesser des Achsstummels gross ist und die Anbringung der Dehnmessstreifen im Inneren des Achsstummels schwierig und zeitaufwendig ist. Als nächster Stand der Technik ist die Druckschrift US 3 488 997 A anzusehen. Weiterer Stand der Technik ist durch die Druckschriften US 4 095 660 A und US 4 361 199 A gegeben.

Entsprechend ist es die Aufgabe der vorliegenden Erfindung, eine Vorrichtung zu schaffen, welche auf einfache Weise erlaubt, das auf einen Lastträger wie beispielsweise einem Achsstummel lastende Gewicht zu bestimmen.

Diese Aufgabe wird gelöst durch die Kennzeichnenden Merkmale gemäss Anspruch 1.

Dadurch, dass ein mechanisches Übertragungsglied verwendet wird, kann die Bohrung im Lastträger mit geringem Durchmesser ausgebildet werden. Dadurch, dass der Sensor in einem Messabschnitt angeordnet ist, d.h. entfernt vom belastbaren Abschnitt, kann dieser an einem geeigneten Ort angeordnet, d.h. mit geringem Aufwand montiert werden. Im Ganzen ergibt sich eine einfache und kostengünstige Anordnung von geringen Dimensionen.

Besondere Ausführungsformen sind in den abhängigen Ansprüchen beschrieben. Beispielsweise kann durch die entsprechenden Modifikationen der Erfindung die Messgenauigkeit gesteigert und insbesondere unabhängig vom Ort des Lastangriffs gemacht werden, da dieser oft das Messresultat verfälscht.

Obschon die Erfindung anhand eines von einem LKW zu transportierenden Containers bzw. anhand eines Seilträgers einer Seilbahn dargestellt wird, umfasst ihr Anwendungsbereich alle möglichen weiteren Anwendungen, bei denen die auf einen belastbaren Abschnitt eines elastisch deformierbaren Lastträgers wirkende Last bestimmt werden soll.

Die Erfindung wird nachstehend anhand der Figuren näher erläutert. Es zeigt:
- Fig. 1a: schematisch einen Querschnitt durch eine Grundausführungsform eines Lastträgers mit einer beispielhaften Messanordnung,
- Fig. 1b: den Lastträger von Figur 1a unter einer Last,
- Fig. 2: einen Querschnitt durch eine zweite erfindungsgemässe Ausführungsform eines Lastträgers mit einer erfindungsgemässen Messanordnung,
- Fig. 3a: schematisch einen Querschnitt durch eine dritte, bevorzugte Ausführungsform eines Lastträgers mit einer erfindungsgemässen Messanordnung,
- Fig. 3b: einen vergrösserten Ausschnitt von Figur 3a am Ort der Wippenlagerung,
- Fig. 3c: schematisch den Verlauf der Biegelinie der Wippenlagerung von Figur 3a,
- Fig. 4: schematisch und im Hinblick auf die Anschaulichkeit in überhöhter Darstellung das Funktionsprinzip der bevorzugten Ausführungsform nach Figur 2 oder 3a bis 3c in belastetem Zustand, und
- Fig. 5a und 5b: schematisch einen erfindungsgemäss ausgerüsteten LKW.

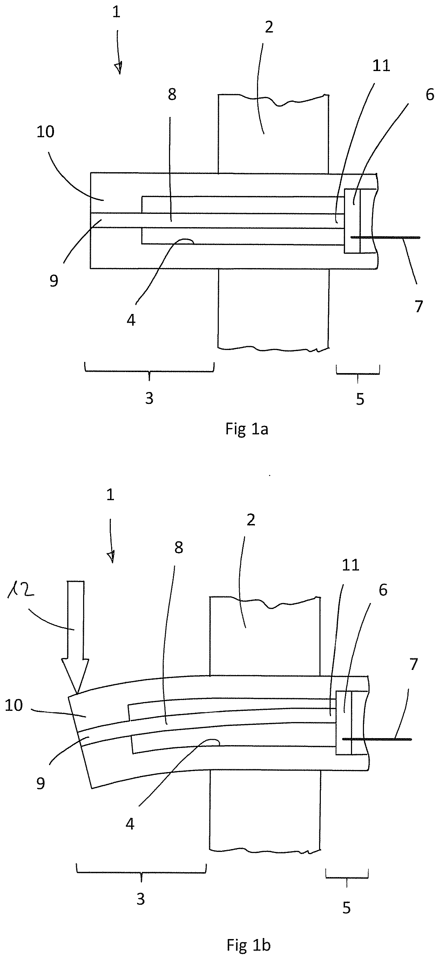

Figur 1a zeigt schematisch einen beispielhaft ausgebildeten Lastträger 1, beispielsweise einen Achsstummel, eine vorkragende Platte oder einen Bauelement irgendwelcher Art im Querschnitt, das hier in eine Halterung 2 eingespannt und damit festgelegt ist. Ein belastbarer Abschnitt 3 des Lastträgers 1 ragt aus der Einspannung 2 hervor. Die Länge des vorkragenden Abschnitts 3 ist hier auf die Bedürfnisse der Darstellung der Erfindung ausgelegt und kann abweichen, d.h. länger oder auch kürzer sein, entsprechend dem aktuellen Maschinenelement oder Bauteil. Im Innern des Lastträgers 1 ist ein Hohlraum 4 vorgesehen (beispielsweise eine Bohrung), der sich vom belastbaren Abschnitt 3 aus durch diesen hindurch erstreckt, bis zu einem vom belastbaren Abschnitt 3 entfernt gelegenen Messabschnitt 5 des Lastträgers 1, in welchem ein Sensor 6 angeordnet ist. Eine Datenleitung 7 für die Messsignale des Sensors 6 führt beispielsweise zu einem zur Entlastung der Figur nicht dargestellten Rechner, der die Messsignale geeignet aufbereitet.

Ein hier als Stab 8 ausgebildetes Übertragungsglied ist mit seinem linken Ende 9 am (linken) Ende 10 des belastbaren Abschnitts 3 eingespannt und erstreckt sich durch den Hohlraum 4 zum Sensor 6, an welchem der Stab 8 mit seinem rechten Ende 11 betriebsfähig festgelegt ist. Der Stab 8 bzw. das Übertragungsglied verläuft hier etwa im Bereich der Längsachse des Lastträgers 1, wobei eine andere Lage ebenfalls möglich ist.

Figur 1b zeigt den Lastträger von Figur 1a unter einer durch den Pfeil symbolisierten Last 12, welche bewirkt, dass sich der elastische Lastträger 1 in Lastrichtung biegt, so dass sein Ende 9 etwas translatorisch nach unten verschoben und gekippt ist. Dadurch ist auch der Stab 8 aus seiner ursprünglichen Lage ausgelenkt, und erstreckt sich nun nach rechts oben, wobei sein rechtes Ende 11 auf Grund der Auslenkung auf den Sensor 6 einwirkt, der dieser Einwirkung entsprechend ein Messsignal generiert. Bevorzugt ist der Sensor 6 als ein dem Fachmann als solcher bekannter Schwingsaitensensor ausgebildet, der seinerseits einen elastisch deformierbaren Rahmen besitzt, an welchem der Stab 8 angreift, diesen der Last 3 entsprechend verformt, welche Verformung der Schwingsaitensensor erkennt und daraus das Messsignal erzeugt.

In der Figur 1b ist die Verformung des Lastträgers 1 überhöht dargestellt, und damit auch die Verformung des Stabs 6 sowie der Deformationsweg des belastbaren Abschnitts 3, d.h. die Verschiebung des linken Endes 10 des Lastträgers 1.

Zusammenfassend ist in den Figuren 1a und 1b generell ein elastisch deformierbarer Lastträger 1 mit einer Messanordnung für die Grösse einer in einem belastbaren Abschnitt 3 auf den Lastträger 1 wirkende Last 11 dargestellt, wobei ein mechanisches Übertragungsglied (der Stab 8) vorgesehen ist, das sich vom belastbaren Abschnitt 3 zu einem Messabschnitt 5 des Lastträgers 1 erstreckt und mit einem beim Messabschnitt 5 angeordneten Sensor 6 betriebsfähig zusammenwirkt.

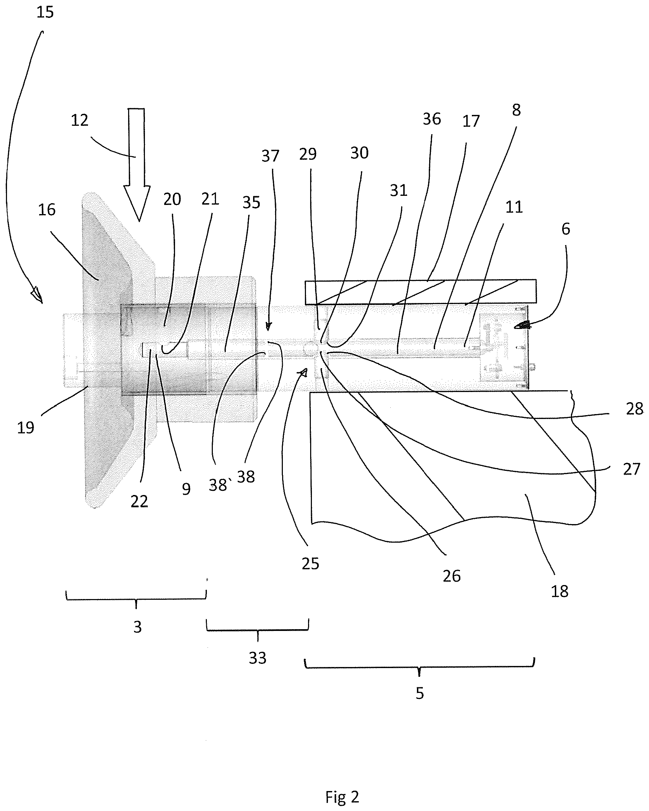

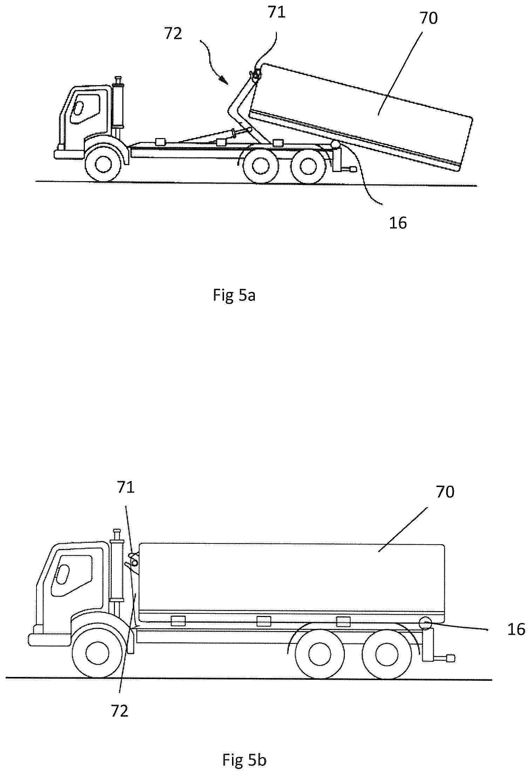

Figur 2 zeigt einen Querschnitt durch eine weitere Ausführungsform des erfindungsgemässen Lastträgers, der hier als Achsstummel 15 ausgebildet ist, eine Laufrolle 16 trägt und über eine schematisch dargestellte Einspannung 17 am ebenfalls schematisch angedeuteten Chassis 18 eines LKW abgestützt ist. Diese Konfiguration liegt etwa vor bei einem LKW, der Container laden kann, s. dazu Figur 5 unten. An dieser Stelle sei angemerkt, dass in den Figuren auf metallische Lastträger Bezug genommen ist, die Anwendung der Erfindung aber auch für elastische, bevorzugt harte nicht metallische Werkstoffe in Frage kommt. Ebenfalls ist es erfindungsgemäss, das Übertragungsglied ausserhalb des Lastträgers zu positionieren, obschon natürlich die gezeigte Anordnung vorteilhaft ist.

Ersichtlich sind verschiedene Kanäle 19 zur Schmierung der Laufrolle sowie ein Bolzen 20, der wiederum in eine Nut 21 des als Stab 8 ausgebildeten Übertragungsglieds (das im Allgemeinen vorzugsweise ein langgestreckter Körper ist) eingreift und dieses so in Position hält. Das linke Ende des Stabs 8 ist im belastbaren Abschnitt 3 des Achsstummels eingespannt, hier in eine Bohrung 22 spielfrei eingepasst, so dass sich jede Deformation (Translation/Kippen) des belastbaren Abschnitts 3 des Achsstummels 15 auf Grund der Last 12 auf den Stab 8 überträgt.

Weiter dargestellt ist eine Wippenlagerung 25 für das als Stab 8 ausgebildete Übertragungsglied, welches bewirkt, dass der Stab 8 bei der Durchbiegung des belastbaren Abschnitts 3 eine Wippbewegung ausführt, d.h. bei einer lastbedingten Senkung seines linken Endes 9 das rechte Ende 11 hebt bzw. heben will (und umgekehrt bei einer Entlastung), je nach der Ausbildung des Sensors 6, der eine Hebung (oder Senkung) des linken Endes 11 zulässt oder nicht.

Wie erwähnt kann der Sensor 6 als Schwingsaitensensor, als Dehnmessstreifen oder auch anders ausgebildet sein. Ist der Sensor 6 selbst verformbar, hebt bzw. senkt sich das linke Ende 11, ist der Sensor 6 nicht verformbar (z.B. weglose Kraftmessung) bleibt das linke Ende 6 in Position, wobei sich dann der Stab 6 der Last 12 entsprechend elastisch durchbiegt.

Die Wippenlagerung weist einen Lagerbolzen 26 auf, der endseitig eine Kugelauflage 27 besitzt, die ihrerseits bevorzugt in eine dafür vorgesehene Ausnehmung 28 im Stab 8 eingreift und diesen so verschwenkbar lagert. Ein Gegenbolzen 29 mit einer geeignet ausgebildeten Kugelauflage 30 greift in eine dafür vorgesehene weitere Ausnehmung 31 im Stab 8 ein und hält diesen im Betrieb in Position, so dass dieser beispielsweise nicht vom Lagerbolzen 26 abheben kann.

Die Laufrolle 16 sitzt auf einem Teilabschnitt des Achsstummels 15 auf, nämlich soweit, wie ein Lager bzw. eine Büchse 31 zwischen der Innenbohrung 32 der Laufrolle 16 und dem Achsstummel eine Verbindung herstellt. Dieser Teilabschnitt bildet in der gezeigten Ausführungsform den belastbaren Abschnitt des Achsstummels 15. Der am LKW-Chassis 18 mit Hilfe der Einspannung 17 festgelegte weitere Teilabschnitt des Achsstummels 15 bildet den Messabschnitt 5.

Für den Achsstummel 15 ergibt sich, dass er aufgrund der Einspannung 17 und der Büchse 31 über die Länge des belastbaren Abschnitts 3 und die Länge des Messabschnitts 5 versteift ist, nicht aber über die Länge eines von Einspannung frei gebliebenen Deformationsabschnitts 33.

Durch die Versteifung wird die Messung der Last 12 erschwert, da diese letztlich vom Deformationsweg des belastbaren Abschnitts 3 abhängt. Grundsätzlich ist mit grösserem Deformationsweg eine höhere Auflösung der Messresultate erreichbar bzw. konstruktiv einfacher und damit kostengünstiger zu erreichen. Der Deformationsabschnitt 33 ermöglicht nun, den Deformationsweg des belastbaren Abschnitts 3 im gewünschten Mass anzupassen, da im Deformationsabschnitt 3 eine Versteifung nicht vorhanden ist.

Zusammenfassend ist zwischen dem belastbaren Abschnitt 3 und dem Messabschnitt 5 ein Deformationsabschnitt 33 vorgesehen, der sich im Betrieb unter der Einwirkung der Last 12 elastisch deformiert und damit eine Relativverschiebung zwischen dem belastbaren Abschnitt 3 und dem Messabschnitt 5 bewirkt. Der Fachmann kann nun entsprechend der konkreten Anordnung, insbesondere auch im Hinblick auf den verwendeten Sensor 6, die Länge des Deformationsabschnitts 3 auf die gewünschte Messgenauigkeit abstimmen oder diesen auch ganz weglassen.

Das in der Figur als Wippe ausgebildete Übertragungsglied ist vorzugsweise im Messabschnitt 5 gelagert, d.h. die Wippenlagerung 25 befindet sich besonders bevorzugt am hier linken Ende des Messabschnitts 5, im Übergang des versteiften Teilabschnitts des Achsstummels 15 zu dessen frei deformierbarem Abschnitt 33.

Die in der Figur 2 dargestellte Anordnung bildet (im Gegensatz zur Anordnung gemäss der Figuren 1a und 1b) eine Balkenwaage, deren Balken (d.h. das hier als Stab 3 ausgebildete Übertragungsglied) an einer waagrechten Achse (d.h. am Wipplager 25) gelagert ist. Der Stab ist im Gleichgewicht, wenn die Drehmomente, erzeugt durch die Last 12 und die Reaktion des Sensors 3, im Gleichgewicht sind. Damit ist die Länge der entsprechenden Hebelarme des Stabs 3 relevant, nämlich die Länge des Lastarms 35 zwischen der Einspannung durch die Bohrung 22 und dem Wippenlager 25 einerseits und die Länge des Messarms 36 vom Wippenlager 25 bis zum Sensor 6 andererseits. Die Länge des Messarms 36 ist konstruktivbedingt konstant, die physische Länge des Lastarms 35 zwar auch, die Durchbiegung des Lastarms 35 hängt jedoch ab vom Ort der Auflage der Last, welcher je nach den Umständen mehr oder weniger variieren kann. Damit variiert die Reaktion des Messarms 36 nicht nur bei Unterschiedlicher Last, sondern unerwünscht auch nach dem Ort des Lastangriffs.

Es ergibt sich, dass vorliegend (und analog auch in der Anordnung gemäss den Figuren 1a und 1b) das Messergebnis verfälscht wird, wenn die Last nicht genau am vorbestimmten Ort angreift.

Im hier als Stab 3 ausgebildeten Übertragungsglied ist entsprechend ein mechanischer Filter 37 für die lastbedingten Biegemomente vorgesehen, derart, dass im Betrieb nur die der Last 12 entsprechende Querkraft vom belastbaren Abschnitt 3 zum Messabschnitt übertragen wird. Da die Querkraft unabhängig ist vom Ort des Lastangriffs, verhindert der Filter 37 eine entsprechende Verfälschung des Messresultats.

Bevorzugt weist der mechanische Filter 37 eine im vorliegend als Stab 3 ausgebildeten Übertragungsglied vorgesehene Schwächungsstelle auf, die in der gezeigten Ausführungsform zwei vorzugsweise als Schlitze 38,38' ausgebildete Ausnehmungen aufweist. Die Schwächungstelle bildet ein elastisches Gelenk und erlaubt ein mechanisches Knicken des Übertragungsglieds. Die die Schlitze 38,38' gemäss der in der Figur gezeigten Ausführungsform erlauben das erwähnte elastische Knicken des Stabs 3.

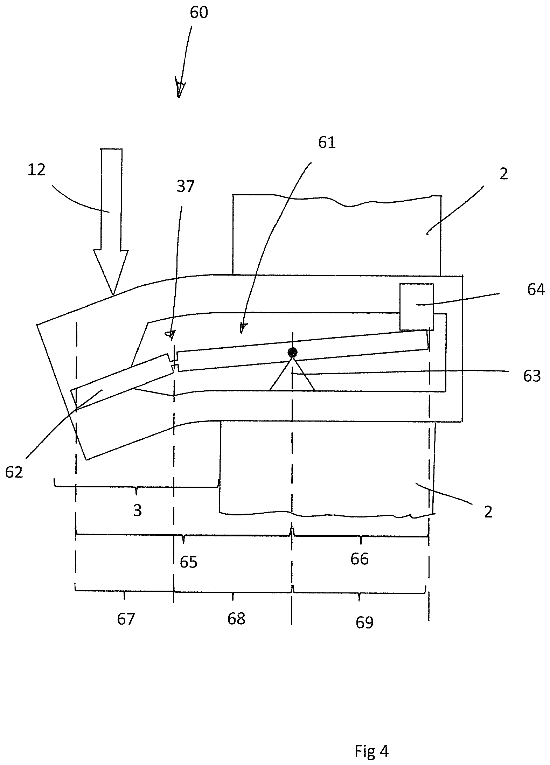

Die Funktion des mechanischen Filters 37 ist unten, anhand von Figur 4 näher beschrieben.

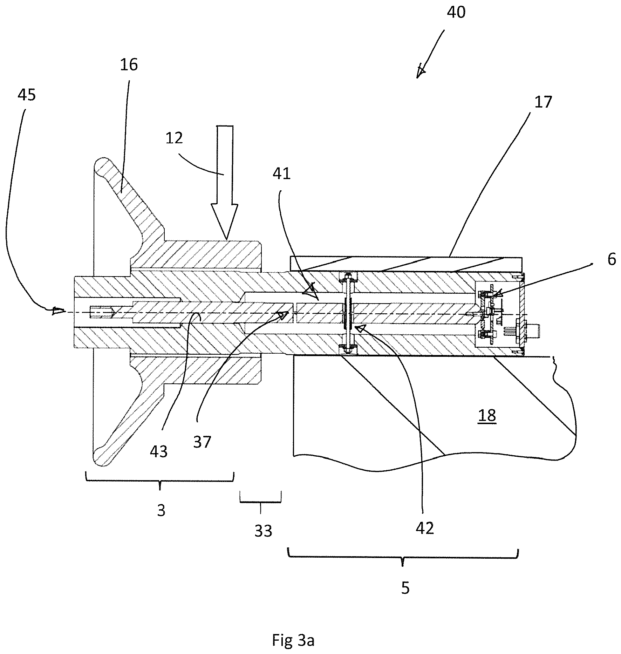

Figur 3a zeigt eine alternative Ausführungsform des erfindungsgemässen Lastträgers, der wie in Figur 2 beispielhaft als Achsstummel 40 ausgebildet ist, damit eine Laufrolle 16 trägt und an einem Chassis 18 eines LKW festgelegt ist.

Die in der Figur 2 gezeigte Ausführungsform, bei welcher das Übertragungsglied als Wippe ausgebildet ist, führt zu einer erhöhten Messgenauigkeit für die Last 12, besitzt jedoch noch den Nachteil, dass die in der Wippenlagerung 25 herrschende Reibung zwischen der Kugelauflage 27 und der Ausnehmung 28 eine Hysterese bei den Messwerten verursacht, welche die Messung etwas verfälschen kann. Dieser verbliebene Nachteil wird in der Ausführungsform von Figur 3a vermieden.

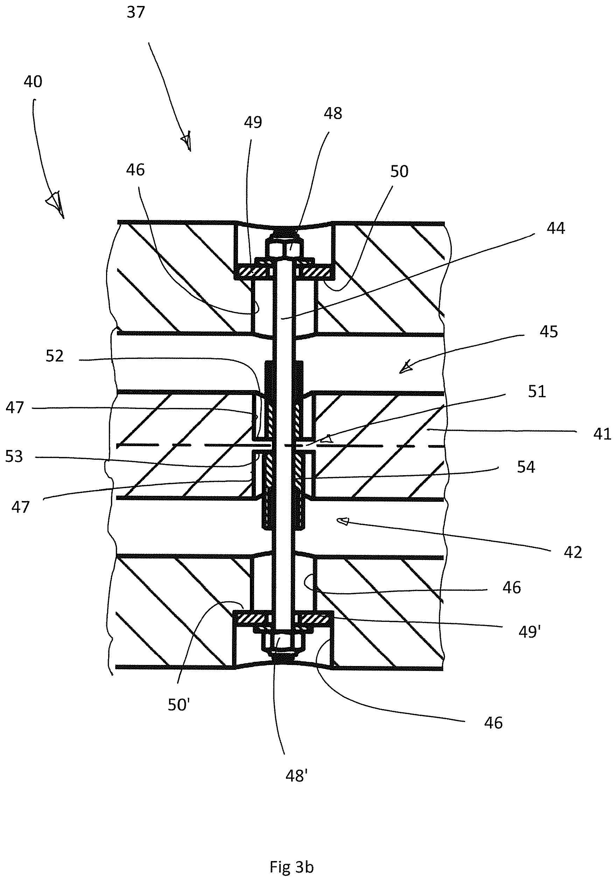

Die in Figur 3a gezeigte Anordnung ist analog zu derjenigen von Figur 2 ausgebildet. Ein als Stab 45 ausgebildetes Übertragungsglied verläuft durch den Achsstummel 40 hindurch, ist am einen Ende über eine Verengung 43 der Bohrung im Achsstummel 40 eingespannt und wirkt am anderen Ende betriebsfähig mit dem Sensor 6 zusammen. Eine Wippenlagerung 41 weist eine Biegefederanordnung 42 mit einer Biegefeder 44 (Figur 3b) auf, die den Stab 45 für die Wippbewegung nun praktisch reibungsfrei lagert.

Figur 3b zeigt einen vergrösserten Ausschnitt aus Figur 3a am Ort der Wippenlagerung 25. Die Biegefeder 44 ist bevorzugt als elastisch biegbarer Stab ausgebildet, kann aber auch eine andere geeignete Konfiguration aufweisen. Sie ragt bei der gezeigten Ausführungsform durch eine im Achsstummel 40 verlaufende Bohrung 46 und durch eine mit dieser fluchtenden, im Stab 45 verlaufenden Bohrung 47 hindurch. Die Biegefeder 44 ist in der Bohrung 46 festgelegt, mit Hilfe von endseitig angeschraubten Muttern 48,48', die an Unterlagsscheiben 49,49' anstossen, welche ihrerseits auf Stufen 50,50' der Bohrung 46 aufliegen und so die Biegefeder 44 am Achsstummel 40 fixieren.

Die Bohrung 47 im Stab 45 ist zwar durchgehend, weist aber eine Verengung 51 auf, die gegen oben eine Stufe 52 und gegen unten eine Stufe 53 bildet. An der Stufe 53 schlägt eine Hülse 54 an, die ihrerseits an der Biegefeder 44 festgeschraubt und damit an dieser festgelegt ist. Das als Stab 45 ausgebildete Übertragungsglied liegt somit mit seiner Stufe 53 auf der an der Biegefeder 44 fixierten Hülse 54 auf und wird dadurch durch die Biegefeder 44 gelagert. Eine Gegenhülse 55 ist ebenfalls an der Biegefeder 44 festgeschraubt, schlägt gegen die obere Stufe 52 gegebenenfalls mit einer Toleranz an und hält so den Stab 45 in Position.

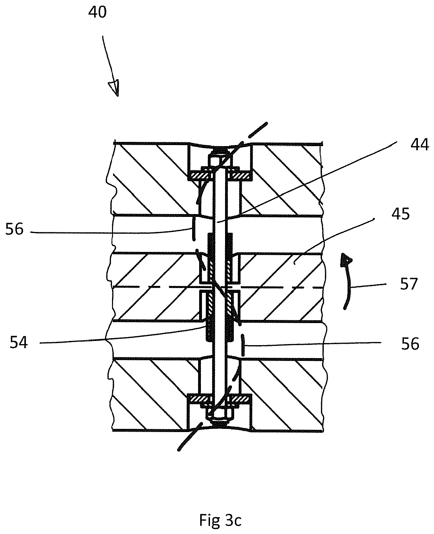

Figur 3c zeigt die gestrichelt (und überhöht) eingetragene S-förmige Biegelinie 56 der Biegefeder 44, falls sich der Stab 45 in Richtung des Pfeils 57 verkippt. Bei einer Verkippung in Gegenrichtung des Pfeils 57 ändert sich die Biegelinie 56 natürlich entsprechend.

Es ergibt sich, dass die Wippenlagerung 41 eine Biegefederanordnung 42 aufweist, die das Übertragungsglied durchsetzt und über ihre Durchbiegung die Wippbewegung des Übertragungsglieds erlaubt. Damit ist die Wippbewegung ohne Hysterese, da die Dämpfung der Biegefeder 44 während ihrer Biegung für die vorliegende Messung nicht relevant ist.

Figur 4 zeigt die Funktion des mechanischen Filters 37 (s. dazu oben, zu Figur 2) im Detail. Wie in Figur 1 ist ein Lastträger 60 in eine Halterung 2 eingespannt und damit festgelegt. Durch eine Last 12 wird dessen belastbarer Abschnitt 3 nach unten gebogen (ein allfälliger Deformationsabschnitt ist zur Entlastung der Figur weggelassen). Das wiederum als Stab 61 ausgebildete Übertragungsglied ist im belastbaren Abschnitt 3 mit seinem linken Ende 62 eingespannt, weist einen mechanischen Filter 37 für Biegemomente auf, ist über die Wippenlagerung 63 verkippbar gelagert und wirkt mit dem Sensor 64 betriebsfähig zusammen.

Wie oben zu Figur 2 erwähnt, entspricht der Stab 61 dem Balken einer Balkenwaage, mit einem Lastarm 65 und einem Messarm 66.

Je nach Ort des Lastangriffs bewirkt die Last 12 im hier als Stab 61 ausgebildeten Übertragungsglied ein über seine Länge variierendes Biegemoment und eine konstant bleibende Querkraft. Das im eingespannten Abschnitt 67 des Stabs 61 anwachsende Biegemoment wird nun nicht in dessen Lastabschnitt 68 übertragen, da der Stab am Ort des Filters 37 knickt. In den Lastabschnitt 68 übertragen wird jedoch nach wie vor die im eingespannten Abschnitt 67 herrschende Querkraft. Diese wirkt nun auf den Lastabschnitt 68, der konstruktiv gegeben konstante Länge aufweist, wie es beim Messabschnitt 69 der Fall ist. Im Ergebnis wirkt nur noch die von der Last abhängige, vom Ort des Lastangriffs unabhängige Querkraft auf den Lastabschnitt 68, so dass der mechanische Filter die Wirkung des Biegemoments wenigstens im Wesentlichen ausgefiltert hat (ein unbedeutendes Restmoment wird durch die elastische Verbindung zwischen den Abschnitten 67,68 nach wie vor notwendigerweise übertragen). Der mechanische Filter ist also derart ausgebildet, dass im Betrieb nur der Last entsprechende Querkräfte vom Abschnitt zur Aufnahme der Last zum Messabschnitt übertragen werden.

Entsprechend ist es auch erfindungsgemäss, den mechanischen Filter als Gelenk mit einer horizontalen Drehachse auszubilden, beispielsweise als horizontale Achse, an welcher Augen der beiden Abschnitte angelenkt sind. Bei kleinen Strukturen ist jedoch eine Knickstelle vorzuziehen.

Zusammenfassend weist der mechanische Filter 37 eine Schwächungsstelle im Übertragungsglied auf, die ihrerseits einen dickenreduzierten Abschnitt besitzt, welcher sich bevorzugt in Lastrichtung gesehen im Bereich der Neutralen Faser des Übertragungsglieds befindet.

Figur 5a zeigt einen LKW, der einen Container 70 über ein bekanntes, mit einem am Container 70 angreifenden Haken 71 aufweisendes Hakengerät 72 auf- oder ablädt, wobei der Container über Laufrollen 16 (Figuren 2 und 3a) läuft, die entsprechend gewichtsbelastet sind. Figur 5b zeigt den LKW von Figur 5a mit aufgeladenem Container 70. Bevorzugt sind an beiden Längsseiten des LKW je eine Laufrolle 16 vorgesehen, die auf einem erfindungsgemäss ausgebildeten Achsstummel 15,40 (Figuren 2 und 3a bis 3c) angeordnet sind und die präzise Messung des auf ihnen lastenden Gewichts des Containers erlauben. Erfindungsgemäss ist es nun weiter so, dass das Hakengerät 72 ebenfalls mit einem Gewichtssensor ausgestattet ist. Dann kann das Gewicht des Containers 70 an drei Punkten erfasst werden, nämlich an den beiden Laufrollen 16 und am Haken 71 des Hakengeräts 72 und durch einen am LKW geeignet angeordneten Rechner in Echtzeit erfasst und ausgewertet werden. In der WO 2012/106826 ist ein geeignet ausgebildetes Hakengerät beschrieben. An dieser Stelle sei angemerkt, dass die in der WO 2012/106826 im Träger des Hakengeräts angeordneten Sensoren auch längs und quer zum Träger positioniert werden können und damit eine Gewichtsmessung im Hakengerät 71 besonders einfach wird: Das Gewicht des Containers wird dann in einem Wiegefenster erfasst, bei dem dessen vorderes Ende, gehalten durch das Hakengerät 71, einige cm über der Auflage schwebt, was durch die Stellung des Hakengeräts oder durch einen vom Fachmann geeignet angebrachten Näherungsschalter festgestellt werden kann.

Zusammenfassend ist ebenfalls erfindungsgemäss ein Lastwagen, mit mindestens einem Lastträger für einen zu transportierenden Container, wobei im belastbaren Abschnitt des mindestens einen Lastträgers eine Laufrolle für den Container vorgesehen und der Messabschnitt am Chassis des Lastwagens abgestützt ist. Weiter ist bevorzugt ein Hakengerät vorgesehen, das einen Sensor für eine am Haken wirkende Kraft aufweist, der seinerseits ein Lastsignal in Abhängigkeit von der auf den Haken wirkenden Kraft generiert und vorzugsweise ein Rechner vorgesehen, der die Lastsignale der Sensoren auswertet und diesen ein Gewicht des Containers zuordnet.

Bei einer nicht in den Figuren gezeigten Ausführungsform der vorliegenden Erfindung tragen die Lastträger Laufrollen für ein Seil einer Seilbahn, so dass sich die aktuelle Belastung der Laufrollen in Echtzeit erfassen lässt. Ebenso kann so die auf ein Umlenkrad in einer Berg- oder Talstation wirkende Last erfasst werden.

## Patentansprüche

1. Elastisch deformierbarer Lastträger mit einer Messanordnung für die Grösse einer in einem belastbaren Abschnitt (3) auf den Lastträger (1,15,40,60) wirkende Last (12), wobei zusätzlich ein mechanisches Übertragungsglied vorgesehen ist, das sich vom belastbaren Abschnitt (3) zu einem Messabschnitt (5) des Lastträgers (1,15,40,60) erstreckt und mit einem beim Messabschnitt (5) angeordneten Sensor (6) betriebsfähig zusammenwirkt, **dadurch gekennzeichnet, dass** das Übertragungsglied als Wippe ausgebildet und in einem Wippenlager diesem gegenüber verkippbar gelagert ist.

2. Lastträger nach Anspruch 1, wobei zwischen dem belastbaren Abschnitt (3) und dem Messabschnitt ein Deformationsabschnitt vorgesehen ist, der sich im Betrieb unter der Einwirkung der Last (12) elastisch deformiert und damit eine Relativverschiebung zwischen dem belastbaren Abschnitt (3) und dem Messabschnitt (5) bewirkt.

3. Lastträger nach Anspruch 1, wobei das Übertragungsglied als langgestreckter Körper, vorzugsweise als Stab (8,45,61) ausgebildet ist, der besonders bevorzugt durch den Lastträger (1,15,40,60) hindurch verläuft.

4. Lastträger nach Anspruch 1, wobei das Übertragungsglied im Messabschnitt (5) gelagert ist.

5. Lastträger nach Anspruch 4, wobei die Wippenlagerung (25,41,63) als Kugelauflage (27) ausgebildet ist, auf welcher das Übertragungsglied aufliegt, und wobei bevorzugt die Kugelauflage (27) in eine Ausnehmung (28) im Übertragungsglied eingreift.

6. Lastträger nach Anspruch 4, wobei die Wippenlagerung (25,41,63) eine Biegefederanordnung (42) aufweist, die das Übertragungsglied durchsetzt und über ihre Durchbiegung die Wippbewegung des Übertragungsglieds erlaubt.

7. Lastträger nach Anspruch 1 wobei das Übertragungsglied einen mechanischen Filter (37) für Biegemomente aufweist, derart, dass im Betrieb nur der Last (12) entsprechende Querkräfte vom Abschnitt zur Aufnahme der Last (3) zum Messabschnitt (5) übertragen werden.

8. Lastträger nach Anspruch 7, wobei der mechanische Filter (37) eine Schwächungsstelle im Übertragungsglied aufweist, die ein elastisches Knicken des Übertragungsglieds erlaubt.

9. Lastträger nach Anspruch 8, wobei die Schwächungsstelle einen dickenreduzierten Abschnitt im Übertragungsglieds aufweist, und wobei der dickenreduzierte Abschnitt sich bevorzugt in Lastrichtung gesehen im Bereich der Neutralen Faser des Übertragungsglieds befindet.

10. Lastträger nach Anspruch 8, wobei die Schwächungsstelle zwei einander gegenüberliegende, vorzugsweise als Schlitze (38,38') ausgebildete Ausnehmungen aufweist.

11. Lastträger nach Anspruch 1, wobei das Übertragungsglied im belastbaren Abschnitt (3) eingespannt ist.

12. Lastwagen mit mindestens einem Lastträger für einen zu transportierenden Container (70) nach Anspruch 1, wobei im belastbaren Abschnitt (3) des mindestens einen Lastträgers eine Laufrolle für den Container (70) vorgesehen und der Messabschnitt (5) am Chassis (18) des Lastwagens abgestützt ist.

13. Lastwagen nach Anspruch 12, wobei weiter ein Hakengerät (72) vorgesehen ist, das einen Sensor (6) für eine am Haken (71) wirkende Kraft aufweist, der seinerseits ein Lastsignal in Abhängigkeit von der auf den Haken (71) wirkenden Kraft generiert und vorzugsweise ein Rechner vorgesehen ist, der die Lastsignale der Sensoren auswertet und diesen ein Gewicht des Containers (70) zuordnet.

14. Seilbahn mit einer Laufrolle oder einem Umlenkrad und einem auf diesem laufenden Seilbahnseil, **gekennzeichnet durch** einen die Laufrolle oder das Umlenkrad lagernden Lastträger nach Anspruch 1.

## Claims

1. An elastically deformable load support with a measuring system for the size of a load (12) acting on the load support (1, 15, 40, 60) in a loadable section (3), wherein
a mechanical transmission component is additionally provided, which extends from the loadable section (3) to a measuring section (5) of the load support (1, 15, 40, 60) and operatively interacts with a sensor (6) arranged by the measuring section (5), **characterized in that**
the transmission element is designed as a rocker and mounted in a rocker bearing so that it can tilt relative to the latter.

2. The load support according to claim 1, wherein a deformation section is provided between the loadable section (3) and measuring section, which elastically deforms during operation while exposed to the load (12), and thereby produces a relative displacement between the loadable section (3) and measuring section (5).

3. The load support according to claim 1, wherein the transmission component is designed as an elongated body, preferably as a rod (8, 45, 61), which especially preferably runs through the load support (1, 15, 40, 60).

4. The load support according to claim 1, wherein the transmission component is mounted in the measuring section (5).

5. The load support according to claim 4, wherein the rocker bearing (25, 41, 63) is designed as a ball support (27) upon which the transmission component rests, and wherein the ball support (27) preferably engages into a recess (28) in the transmission component.

6. The load support according to claim 4, wherein the rocker bearing (25, 41, 63) has a spiral spring assembly (42) that passes through the transmission component, and when deflected allows the rocking motion of the transmission component.

7. The load support according to claim 1, wherein the transmission component has a mechanical filter (37) for bending moments, such that only transverse forces corresponding to the load (12) are transferred from the section for receiving the load (3) to the measuring section (5) during operation.

8. The load support according to claim 7, wherein the mechanical filter (37) has a weak point in the transmission component, which allows the transmission component to elastically bend.

9. The load support according to claim 8, wherein the weak point has a reduced-thickness section in the transmission component, and wherein the reduced-thickness section is preferably located in the area of the neutral fibers of the transmission component as viewed in the loading direction.

10. The load support according to claim 8, wherein the weak point has two opposing recesses preferably designed as slits (38, 38').

11. The load support according to claim 1, wherein the transmission component is clamped into the loadable section (3).

12. A truck with at least one load support for a container (70) to be transported according to claim 1, wherein a roller is provided for the container (70) in the loadable section (3) of the at least one load support, and the measuring section (5) is supported against the chassis (18) of the truck.

13. The truck according to claim 12, wherein a hook lift (72) is provided that has a sensor (6) for a force acting on the hook (71), which on its part generates a load signal as a function of the force acting on the hook (71), and a computer is preferably provided, which evaluates the load signals of the sensors and allocates a weight of the container (70) to the latter.

14. A cableway with a roller or a deflecting wheel and a cableway rope running on the latter, **characterized by** a load support according to claim 1 that bears the roller or the deflecting wheel.

## Revendications

1. Support de charge élastiquement déformable avec un dispositif de mesure pour la taille d'une charge (12) agissant sur le support de charge (1, 15, 40, 60) dans une section capable de supporter une charge (3), dans lequel
il est également prévu un organe de transmission mécanique s'étendant à partir de la section capable de supporter une charge (3) vers une section de mesure (5) du support de charge (1, 15, 40, 60) et coopérant de façon opérationnelle avec un capteur (6) disposé au niveau de la section de mesure (5), **caractérisé en ce que**
l'organe de transmission est conçu comme une bascule et monté dans un palier à bascule de façon à pouvoir pivoter par rapport à celui-ci.

2. Support de charge selon la revendication 1, dans lequel il est prévu une section de déformation entre la section capable de supporter une charge (3) et la section de mesure, laquelle se déforme élastiquement pendant le fonctionnement sous l'action de la charge (12) et provoque ainsi un déplacement relatif entre la section capable de supporter une charge (3) et la section de mesure (5) .

3. Support de charge selon la revendication 1, dans lequel l'organe de transmission est conçu comme un corps allongé, avantageusement comme un bâton (8, 45, 61) traversant particulièrement avantageusement le support de charge (1, 15, 40, 60) .

4. Support de charge selon la revendication 1, dans lequel l'organe de transmission est logé dans la section de mesure (5).

5. Support de charge selon la revendication 4, dans lequel le palier à bascule (25, 41, 63) est conçu comme un appui sphérique (27) sur lequel s'appuie l'organe de transmission, et dans lequel l'appui sphérique (27) s'engage de préférence dans une cavité (28) dans l'organe de transmission.

6. Support de charge selon la revendication 4, dans lequel palier à bascule (25, 41, 63) comporte un ensemble de ressort de flexion (42) traversant l'organe de transmission et permettant le mouvement de bascule de l'organe de transmission de par sa flexion.

7. Support de charge selon la revendication 1, dans lequel l'organe de transmission comporte un filtre mécanique (37) pour les couples de flexion, de telle façon que pendant le fonctionnement, seules des forces transversales correspondant à la charge (12) sont transmises de la section capable de supporter une charge (3) à la section de mesure (5).

8. Support de charge selon la revendication 7, dans lequel le filtre mécanique (37) présente une zone d'affaiblissement dans l'organe de transmission, permettant un flambage élastique de l'organe de transmission.

9. Support de charge selon la revendication 8, dans lequel la zone d'affaiblissement présente une section à épaisseur réduite dans l'organe de transmission, et dans lequel la section à épaisseur réduite se trouve de préférence dans la zone de la fibre neutre de l'organe de transmission, vue dans la direction de charge.

10. Support de charge selon la revendication 8, dans lequel la zone d'affaiblissement comporte deux cavités opposées, avantageusement formées comme des fentes (38, 38').

11. Support de charge selon la revendication 1, dans lequel l'organe de transmission est serré dans la section capable de supporter une charge (3).

12. Camion avec au moins un support de charge pour un conteneur à transporter (70) selon la revendication 1, dans lequel un galet est prévu pour le conteneur (70) dans la section capable de supporter une charge (3) de l'au moins un support de charge, et la section de mesure (5) s'appuie sur le châssis (18) du camion.

13. Camion selon la revendication 12, dans lequel il est également prévu un dispositif de crochet (72) comportant un capteur (6) pour une force agissant sur le crochet (71), lequel génère pour sa part un signal de charge en fonction de la force agissant sur le crochet (71), et dans lequel il avantageusement prévu un ordinateur évaluant les signaux de charge des capteurs et attribuant un poids du conteneur (70) à ceux-ci.

14. Téléphérique avec un galet ou une roue de renvoi ainsi qu'un câble de téléphérique, **caractérisé par** un support de charge selon la revendication 1, supportant le galet ou la roue de renvoi.
